# EUROPÄISCHE PATENTSCHRIFT

(11) **EP 4 072 808 B1**
(45) Veröffentlichungstag und Bekanntmachung des Hinweises auf die Patenterteilung: **29.11.2023**
(21) Anmeldenummer: 20821191.2
(22) Anmeldetag: 08.12.2020
(51) Int. Cl.: B28B 17/00, G06Q 10/0639, G06Q 50/04, G01N 21/95, G01S 17/42, G01S 17/88, G01S 17/89, G06F 18/2431, G06V 20/00

(54) **COMPUTERGESTÜTZTES VERFAHREN UND EINRICHTUNG ZUR PRÜFUNG EINER SICHTBETONQUALITÄT**
COMPUTER-ASSISTED METHOD AND DEVICE FOR TESTING THE QUALITY OF EXPOSED CONCRETE
PROCÉDÉ ASSISTÉ PAR ORDINATEUR ET DISPOSITIF POUR CONTRÔLER LA QUALITÉ D'UN BÉTON APPARENT

(30) Priorität: 10.12.2019 DE 102019219269
(43) Veröffentlichungstag der Anmeldung: 19.10.2022
(73) Patentinhaber: PERI SE, 89264 Weißenhorn (DE)
(72) Erfinder: STAVES, Henning, 89264 Weißenhorn (DE); SPAN, Wolfgang, 89264 Weißenhorn (DE); BOTZENHART, Florian, 89264 Weißenhorn (DE)
(74) Vertreter: Müller Schupfner & Partner Patent- und Rechtsanwaltspartnerschaft mbB
(86) Internationale Anmeldenummer: PCT/EP2020/085050
(87) Internationale Veröffentlichungsnummer: WO 2021/116093

(56) Entgegenhaltungen:
- CN-A- 108 197 802
- CN-A- 110 162 925
- US-A1- 2018 040 119

## Beschreibung

Die vorliegende Erfindung betrifft ein computergestütztes Verfahren sowie eine hierzu korrespondierende elektronische Einrichtung zur Prüfung einer Sichtbetonqualität eines Betonbauteils hinsichtlich einer definierten Sichtbetonklasse SB1 bis SB4, wobei die Außenoberfläche des Betonbauteils zumindest teilweise mit einem optischen Messgerät zur Qualitätsprüfung erfasst wird. Außerdem betrifft die Erfindung ein mobiles digitales Endgerät, insbesondere ein Smartphone, das mit einer solchen Einrichtung ausgestattet ist, sowie ein hierauf installiertes Computerprogramm mit Programmcodemitteln zur Ausführung des besagten Verfahrens. Ferner umfasst die Erfindung auch den Einsatz eines trainierten Machine-Learning-Modells zur Zuordnung der optisch erfassten Außenoberfläche zu einer vordefinierten Sichtbetonklasse sowie auch ein Verfahren zum Trainieren des Machine-Learning-Modells.

Das Einsatzgebiet der Erfindung erstreckt sich auf die Bautechnik und wird widmet sich speziell der Qualitätsprüfung im Rahmen der Herstellung von Sichtbeton. Unter Sichtbeton sind Betonbauteile zu verstehen, deren als Ansichtsflächen dienende Außenoberflächen Teil der architektonischen oder innenarchitektonischen Gebäudegestaltung sind. Im strengen Sinn ist die Bezeichnung Sichtbeton auf Außenoberflächen von Betonbauteilen beschränkt, die bei der Herstellung Kontakt zur Schalungshaut einer für die Herstellung benötigten Schalungsanordnung hatten. Obwohl Außenoberflächen von Sichtbeton in vielen unterschiedlichen Ausprägungen und Herstellungstechniken existieren, beispielsweise gefärbt, steinmetzmäßig bearbeitet, gesäuert, gewaschen und dergleichen, sind dennoch all diese Außenoberflächen im Ursprung geschalte Flächen und zeigen ein mehr oder weniger durch die Schalhaut mitbestimmtes Aussehen. Bei der Herstellung von Sichtbeton stellt eine reproduzierbare Oberflächenqualität eine entscheidende Rolle, da das Endergebnis von recht vielen Einflussfaktoren abhängt.

### Stand der Technik

Gemäß dem allgemein bekannten Stand der Technik wird die Oberflächenqualität von Sichtbeton üblicherweise anhand der Fachinformation "Merkblatt Sichtbeton" (Herausgeber: Deutscher Beton- und Bautechnik-Verein e.V. und Verein Deutscher Zementwerke, 53-seitige Ausgabe, 2004) geprüft. Hieraus gehen konkrete Definitionen für Anforderungen an Sichtbetonklassen SB1 bis SB4 hervor, welche in der Praxis als Qualitätsmaßstab dienen. Die Bewertung erfolgt bislang durch Inaugenscheinnahme der Außenoberfläche des Betonbauteils und Zuordnung zu einer der mit jeweiligen technischen Anforderungen und gestalterischen Einzelkriterien definierten Sichtbetonklasse.

Der Sichtbetonklasse SB1 sind Betonflächen mit geringen gestalterischen Anforderungen zugeordnet, die beispielsweise bei Kellerwänden oder dergleichen gewünscht sind. Diese geringen Anforderungen an die geschalte Sichtbetonfläche wird hinsichtlich struktureller Parameter, wie Textur, Porigkeit, Farbtongleichmäßigkeit, Ebenheit, Arbeitsfugen und Schalungsstöße und dergleichen definiert. Hinsichtlich des strukturellen Parameters "Textur" gelten bei der Sichtbetonklasse SB1 die Anforderungen einer weitgehend geschlossenen Zementleim- oder Mörteloberfläche, wobei in den Schalungsstößen ausgetretener Zementleim/Feinmörtel bis ca. 20 mm Breite und ca. 10 mm Tiefe zulässig ist und auch ein Rahmenabdruck des Schalungselements zugelassen ist. Hinsichtlich des strukturellen Parameters "Porigkeit" ist ein Porenanteil mit Porendurchmesser zwischen 2 bis 16 mm von ca. 1,2% der Prüffläche zulässig. Hinsichtlich des Parameters "Farbtongleichmäßigkeit" sind Hell-/Dunkelverfärbungen zulässig, Schmutzflecken jedoch unzulässig. Der strukturelle Parameter "Ebenheit" richtet sich nach den Ebenheitsforderungen gemäß DIN 18202 [R12], Tabelle 3, Zeile 5. Und der strukturelle Parameter "Arbeitsfugen und Schalungsstöße" ist bei Sichtbetonklasse SB1 dann erfüllt, wenn ein Versatz der Flächen im Fugen- oder Stoßbereich 10 mm nicht überschreitet.

Im diametralen Gegensatz hierzu definiert die Sichtbetonklasse SB4 strukturelle Parameter für Betonflächen mit besonders hohen gestalterischen Anforderungen für repräsentative Bauteile und dergleichen. Hierfür ist für den strukturellen Parameter "Textur" eine glatte, geschlossene und weitestgehend einheitliche Betonfläche gefordert. In den Schalungsstößen ist ausgetretener Zementleim/Feinmörtel von bis zu 3 mm Breite zulässig. Es sind lediglich feine, technische unvermeidbare Grate von bis zu 3 mm zulässig. Hinsichtlich des strukturellen Parameters "Porigkeit" darf nur ca. 0,3% der Prüffläche mit Poren mit einem Durchmesser zwischen 2 bis 15 mm versehen sein. Der strukturelle Parameter einer Farbtongleichmäßigkeit ist dann erfüllt, wenn nur geringe Hell-/Dunkelverfärbungen, wie leichte Wolkenbildung, geringe Farbtonabweichungen vorliegen. Unzulässig sind dagegen Schmutzflecken und deutlich sichtbare Schüttlagen sowie Verfärbungen. Der strukturelle Parameter der "Ebenheit" ist gemäß DIN 18202 [R12], Tabelle 3, Zeile 6 definiert und der strukturelle Parameter "Arbeitsfugen und Schalungsstöße" lässt beispielsweise einen Versatz der Flächen im Fugen- oder Stoßbereich von bis zu 3 mm zu.

Zwischen der Sichtbetonklasse SB1 für geringe Anforderungen und der höchsten Sichtbetonklasse SB4 für besondere Anforderungen sind mit den dazwischenliegenden Sichtbetonklassen SB2 und SB3 strukturelle Parameter für Betonflächen mit normalen gestalterischen Anforderungen, wie Treppenhausräumen (SB2) oder Fassaden (SB3), festgelegt.

All die vorstehend erläuterten exemplarischen strukturellen Parameter sind im "Merkblatt Sichtbeton" im Rahmen einer Haupttabelle (Tabelle 1) erfasst, wobei jeder strukturelle Parameter hinsichtlich seiner jeweiligen Ausprägung in einer Untertabelle (Tabelle 2) mit Zusatzinformationen definiert ist. Die manuell subjektive Bewertung gestaltet sich damit recht langwierig.

Aus diesem vorbekannten Regelwerk ergibt sich, dass die Klassifizierung einer Betonbauteilfläche hinsichtlich einer bestimmten Sichtbetonklasse SB1 bis SB4 den subjektiven Einflüssen des Betrachters unterliegt. Außerdem können verschiedene Lichtverhältnisse und/oder ungünstige Kontrastverhältnisse der zu prüfenden Oberfläche die Beurteilung und Zuordnung erschweren. Zudem können durch die Komplexität des Regelwerks auch Falschzuordnungen verursacht werden, indem beispielsweise strukturelle Parameter anhand der rein textlich beschreibenden Kriterien falsch interpretiert und eingeordnet wurden. So kann es in der Praxis durchaus auftreten, dass dieselbe Außenoberfläche eines Betonbauteils durch unterschiedliche Personen bei Verwendung desselben Regelwerks in unterschiedliche Sichtbetonklassen SB1 bis SB4 eingeordnet werden, da beispielsweise der flächige Gesamteindruck einer Betonteilfläche über mangelhafte strukturelle Parameter hinwegtäuscht.

Die US 2018/040119 A1 offenbart ein System sowie ein Verfahren zum Laserscannen einer oder mehrerer Oberflächen, vorzugsweise Außenoberflächen, von Betonbauteilen. Die Bilddaten enthalten dabei auch Distanzinformationen, um zu Prüfzwecken ein dreidimensionales Abbild zu erzeugen.

Die CN 110 162 925 A offenbart ein computergestütztes Verfahren zur Prüfung einer Betonqualität eines Betonbauteils, dessen Außenoberfläche zumindest teilweise mit einem optischen Messgerät zwecks Erstellen eines dreidimensionalen Abbildes von zumindest einem Teil der Außenoberfläche mit Sensormitteln zur Generierung einer Punktwolke erfasst wird. Nachfolgend erfolgt ein Auslesen von Flächen- und Tiefenstrukturinformationen aus diesem dreidimensionalen Abbild, woraufhin ein Vergleichen der ausgelesenen Flächen- und Tiefenstrukturinformationen des dreidimensionalen Abbilds mit in einer Musterbank hinterlegten Flächen- und Tiefenstrukturinformationen durchgeführt wird. Es findet also ein relativer Vergleich statt.

Aus der CN 108 197 802 A geht ebenfalls eine technische Lösung zur Prüfung der Betonqualität eines Betonbauteils hervor.

Es ist daher die Aufgabe der vorliegenden Erfindung, mit einem computergestützten Verfahren sowie einer hiermit korrespondierenden elektronischen Einrichtung ein Hilfsmittel zur Prüfung einer Sichtbetonqualität eines Betonbauteils zur Verfügung zu stellen, mit welchem unter geringem Zeitaufwand eine objektive Qualitätsprüfung hinsichtlich definierter Sichtbetonklassen möglich ist.

### Offenbarung der Erfindung

Die Aufgabe wird hinsichtlich eines computergestützten Verfahrens durch Anspruch 1 gelöst. Der nebengeordnete Anspruch 13 gibt eine hierzu korrespondierende elektronische Einrichtung an, die hinsichtlich Anspruch 15 auch Bestandteil eines mobilen digitalen Endgeräts, insbesondere eines Smartphones, sein kann, auf dem ein Computerprogramm mit Programmcodemitteln zur Ausführung des Verfahrens nach Anspruch 17 ablaufen kann. Daneben widmet sich die Erfindung auch im Anspruch 12 einem Verfahren zum Trainieren eines trainierbaren Machine-Learning-Modells für die Klassifikation hinsichtlich einer Sichtbetonklasse SB1 - SB4. Die verbleibenden abhängigen Ansprüche geben bevorzugte Ausführungsformen der Erfindung an.

Die Erfindung schließt die verfahrenstechnische Lehre ein, dass die Prüfung einer Sichtbetonqualität die folgenden Schritte umfasst:
- Erstellen eines dreidimensionalen Abbilds von zumindest einem Teil der Außenoberfläche durch einen eine Punktewolke generierenden Sensor eines optischen Messgeräts. Als Punktewolke generierender Sensor kommt im Rahmen der vorliegenden Erfindung vorzugsweise ein sogenannter LIDAR-Sensor zum Einsatz. LIDAR ist eine dem Radar verwandte Technologie. Anstelle von Radiowellen werden von einem 3D-Scanner Laserimpulse ausgesendet, die - für das menschliche Auge unsichtbar - auf Objekte treffen und reflektiert werden. Der Sensor misst die Laufzeit zwischen Aussenden und Rückkehr des Laserimpulses und errechnet daraus die Entfernung zwischen Sensor und Objekt mit hoher Auflösung. Ein LIDAR tut dies bis zu einer Million mal pro Sekunde und fasst die Ergebnisse in einem dreidimensionalen Abbild zusammen, welches in Echtzeit generiert wird. Diese sogenannten Punktewolken sind so detailliert, dass diese nicht nur dazu verwendet werden können, Objekte zu erkennen, sondern auch, um diese zu identifizieren, was sich die vorliegende Erfindung zunutze macht. Zur Verifizierung des Abbildes kann der Punktewolken generierende Sensor mit einer herkömmlichen ein zweidimensionales Bild erzeugenden Fotokamera kombiniert werden.
- Auslesen von Flächen- und Tiefenstrukturinformationen aus dem dreidimensionalen Abbild durch eine Bildverarbeitungseinheit. Durch die Punktewolke oder das entsprechende Modell bzw. die Netzstruktur, welche aus einem LIDAR-Scan abgeleitet werden kann, findet eine Erfassung der Sichtbetonoberfläche mit Tiefeninformationen und Referenzierung der Größe statt.
- Vergleichen der ausgelesenen Flächen- und Tiefenstrukturinformationen des dreidimensionalen Abbilds mit für Sichtbetonklassen SB 1 bis SB4 charakteristischen, in einer Musterdatenbank hinterlegten Flächen- und Tiefenstrukturinformationen durch eine Analyseeinheit. Die Analyseeinheit kann dabei den sensortechnisch erfassten Datensatz der zu beurteilenden Sichtbetonfläche mit einer optimal glatten Fläche oder Musterflächen vergleichen, welche für die jeweiligen Sichtbetonklassen SB1 bis SB4 charakteristisch sind. Dabei können beispielsweise Poren in ihrer Größe bemessen, Abweichungen in der Ebenheit messbar sowie Abdrücke im Betonbild mit den dazugehörigen Ausprägungen und Maßen aufgrund Grundlage der für die jeweilige Sichtbetonklasse SB1 bis SB4 geltenden Werte der strukturellen Parameter.
- Zuordnen des Betonbauteils zu einer der Sichtbetonklassen SB1 bis SB4 für die Ergebnisausgabe durch eine Anzeigeeinheit. Dies bedeutet, dass je nach Ausprägung der Textur, Porigkeit, Ebenheit und dergleichen anderen strukturellen Parameter die zu beurteilende Betonoberfläche der entsprechenden Sichtbetonklasse SB1 bis SB4 zugeordnet wird.

Um zusätzlich einen Eindruck über etwaige Verfärbungen der zu prüfenden Außenoberfläche zu bekommen, sollten die Scan-Informationen des vorzugsweise LIDAR-Sensors mit Bildern einer Farb-Fotokamera als weiteren Bestandteil des optischen Messgeräts überlagert werden. Hierdurch lässt sich insbesondere die Klassifizierung hinsichtlich des strukturellen Parameters einer Farbtongleichmäßigkeit verbessern.

Vorzugsweise verwendet die erfindungsgemäße Klassifikation Flächen- und Tiefenstrukturinformationen, welche im "Merkblatt Sichtbetonklassen" als strukturelle Parameter definiert sind. Diese strukturellen Parameter umfassen insbesondere Texturparameter T1 bis T3, Porigkeitsparameter P1 bis P4, Farbtongleichmäßigkeitsparameter FT1 bis FT3, Ebenheitsparameter E1 bis E3, Fugenparameter AF1 bis AF4.

Auf dieser Grundlage erfolgt das Vergleichen hinsichtlich der Texturparameter T 1 bis T3 vorzugsweise durch einen Mustervergleich von auf der Oberfläche detektierten Texturmustern mit entsprechender Maßzuordnung. Das Vergleichen hinsichtlich der Porigkeitsparameter P1 bis P3 erfolgt vorzugsweise durch Zählen und Größenerfassung von auf der Außenoberfläche detektierten Poren. Das Vergleichen hinsichtlich der Farbtongleichmäßigkeitsparameter FT1 bis FT3 erfolgt vorzugsweise durch Erfassung von auf der Außenoberfläche detektierten Verfärbungen im Gegensatz zur Grundfarbe des Betonmaterials. Das Vergleichen hinsichtlich der Ebenheitsparameter E1 bis E3 erfolgt vorzugsweise durch Verlaufsanalyse von entlang der Außenoberfläche detektierten Tiefenschwankungen. Da mit einem LIDAR-Scan auch die Tiefenstrukturinformationen der Betonoberfläche erfassbar sind, kann auf dieser Basis die Ebenheit vergleichend zu Referenzwerten äußerst genau beurteilt werden. Das Vergleichen hinsichtlich der Fugenparameter AF1 bis AF4 erfolgt vorzugsweise durch Mustervergleich von auf der Außenoberfläche detektierten Arbeits- und Schalhautfugen mit entsprechender Maßzuordnung hinsichtlich vorzugsweise Breite und Länge.

An dieser Stelle sei noch einmal betont, dass der Katalog der strukturellen Parameter damit nicht abgeschlossen ist, sondern auch weitere strukturelle Parameter, die nicht unbedingt auch Bestandteil des "Merkblatt Sichtbeton" sein müssen, zur Qualitätsprüfung einer Sichtbetonoberfläche herangezogen werden können, sofern diese aus dem sensortechnisch ermittelten dreidimensionalen Abbild und den hieraus resultierenden Flächen- und Tiefenstrukturinformationen resultieren.

Vorzugsweise erfolgt das Zuordnen des zu prüfenden Betonbauteils zu einer der Sichtbetonklassen SB1 bis SB4 per automatisierter Datenanalyse, beispielsweise auf Basis eines Entscheidungsbaumverfahrens auf Grundlage der strukturellen Parameter.

Gemäß einer weiteren die Erfindung verbessernden Maßnahme ist vorgesehen, dass aus den ausgelesenen Flächen- und Tiefenstrukturinformationen eine Repräsentation ausgewertet wird, die Aufschluss über mindestens einen der vorgenannten strukturellen Parameter gibt, wobei die Repräsentation mit einem trainierten Machine-Learning-Modell auf die Sichtbetonklasse SB1 bis SB4 abgebildet wird, der das dreidimensionale Abbild angehört. Hierdurch lässt sich insbesondere die zu den Vergleichszwecken vorgesehene Musterdatenbank mit weiteren Datensätzen anreichern.

Das Trainieren eines trainierbaren Machine-Learning-Modells für eine solche Anwendung erfolgt vorzugsweise nach Maßgabe der folgenden Schritte:
- Bereitstellen von Trainings-Beispielen von Flächen- und Tiefenstrukturinformationen, die von dem optischen Messgerät mit vorzugsweise LIDAR-Sensor und optionaler Fotokamera erhalten wurden;
- Auswerten von Trainings-Repräsentationen aus den Trainings-Beispielen, die Aufschluss über mindestens einen der strukturellen Parameter geben, der in den jeweiligen Trainings-Beispielen detektierbar oder sichtbar ist,
- Labeln der Trainings-Repräsentationen mit den Soll-Sichtbetonklassen nach Maßgabe des "Merkblatt Sichtbeton", denen die in den Trainings-Beispielen sichtbaren Abbildern angehören,
- Abbilden der Trainings-Beispiele auf Sichtbetonklassen durch das Machine-Learning-Modell,
- Bewerten der Abweichung dieser Sichtbetonklassen von den jeweiligen Soll-Sichtbetonklassen mit einer vorgegebenen Ziel- oder Kostenfunktion, wobei Parameter, die das Verhalten des Machine-Learning-Modells charakterisieren, mit dem Ziel optimiert werden, dass die weitere Verarbeitung von Trainings-Repräsentationen durch das Machine-Learning-Modell voraussichtlich zu einer besseren Bewertung durch die Ziel- oder Kostenfunktion führt.

Das Ziel einer solchen Optimierung ist die Minimierung der gegebenen Ziel- oder Kostenfunktion. Allgemein beschreibt die Ziel- oder Kostenfunktion im Rahmen des Machinelearnings die Abweichung des gewählten Modells von den vorliegenden Daten. Dabei legt die Ausgestaltung der Kostenfunktion qualitativ und quantitativ fest, welche Abweichungen wie geahndet werden.

Somit erhält der Machine-Learning-Algorithmus durch die Ziel- oder Kostenfunktion eine positive oder negative Rückmeldung, die diesem ermöglicht, in einer Simulationsumgebung in vielen iterativen Schritten zu einer sinnvollen Bewertung zu kommen.

Weitere die Erfindung verbessernde Maßnahmen werden nachstehend gemeinsam mit der Beschreibung eines bevorzugten Ausführungsbeispiels anhand der Figuren näher dargestellt. Es zeigt:
- Fig. 1: ein Blockschaltbild einer elektronischen Einrichtung zur Prüfung einer Sichtbetonqualität eines Betonbauteils hinsichtlich einer Sichtbetonklasse SB1 bis SB4,
- Fig. 2: eine schematische Darstellung eines mobilen digitalen Endgeräts mit einer Einrichtung nach Fig. 1,
- Fig. 3: einen schematischen Ablaufplan eines computergestützten Verfahrens zur Prüfung der Sichtbetonqualität unter Anwendung einer Einrichtung nach Fig. 1.

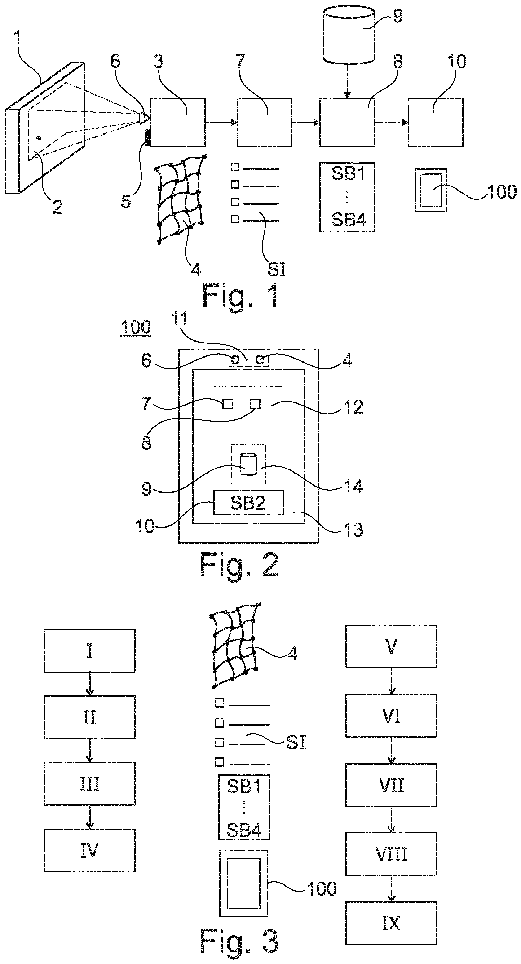

Gemäß Fig. 1 besteht eine elektronische Einrichtung zur Prüfung einer Sichtbetonqualität eines Betonbauteils 1 nach Maßgabe der im "Merkblatt Sichtbeton" definierten Sichtbetonklassen SB1 bis SB4 im Wesentlichen aus einem die Außenoberfläche 2 des Betonbauteils 1 zumindest teilweise erfassenden optischen Messgerät 3. Das optische Messgerät 3 umfasst dabei einen LIDAR-Sensor 4 zur Erfassung eines dreidimensionalen Abbilds 5 sowie eine benachbart hierzu angeordnete Fotokamera 6 zur Erfassung von hiermit überlagerten zweidimensionalen farblichen Bildinformationen.

Eine Bildverarbeitungseinheit 7 liest aus dem vom optischen Messgerät 3 erzeugten dreidimensionalen Abbild 5 und dem zweidimensionalen Bild der Fotokamera 6 hierin enthaltene Flächen- und Tiefenstrukturinformationen aus, welche zur Ermittlung der strukturellen Parameter zur Klassifikation hinsichtlich der Sichtbetonklassen SB1 bis SB4 erforderlich sind.

Eine nachfolgende Analyseeinheit 8 vergleicht diese Flächen- und Tiefenstrukturinformationen mit für die Sichtbetonklassen SB1 bis SB4 charakteristischen, in einer Musterdatenbank 9 hinterlegten Flächen- und Tiefenstrukturinformationen (strukturelle Parameter), um das Betonbauteil 1 schließlich zu einer der Sichtbetonklassen SB1 bis SB4 für die Ergebnisausgabe durch eine Anzeigeeinheit 10 zuzuordnen.

Die vorstehend beschriebene Einrichtung kann dabei Bestandteil eines gemäß Fig. 2 illustrierten mobilen digitalen Endgeräts - hier eines Smartphones - sein, wobei die optische Sensorik 11 des Smartphones den LIDAR-Sensor 4 und die Fotokamera 6 umfasst. Ein integrierter Mikroprozessor 12 führt softwaregesteuert die Funktionalität der Bildverarbeitungseinheit 7 sowie der Analyseeinheit 8 aus, wobei ein Display 13 des Smartphones die Anzeigeeinheit 10 für die Ergebnisausgabe der Qualitätsprüfung bildet. Hierauf wird die anhand der optischen Sensorik 11 nach Maßgabe des vorstehend erläuterten Klassifikationsverfahrens ermittelte Sichtbetonklasse SB1, SB2, SB3 oder SB4 angezeigt. Daneben kann im Rahmen einer erweiterten Funktionalität beispielsweise auch eine Anzeige der ermittelten Werte für die einzelnen zur Beurteilung herangezogenen strukturellen Parameter und dergleichen erfolgen.

Das mobile Endgerät beinhaltet ferner auch einen Speicher 14, welcher bei diesem Ausführungsbeispiel die Musterdatenbank 9 beinhaltet.

Gemäß Fig.3 umfasst ein computergestütztes Verfahren zur Prüfung einer Sichtbetonqualität hinsichtlich einer definierten Sichtbetonklasse SB1 - SB4, die folgenden Schritte:
Zunächst erfolgt ein Erstellen (I) eines dreidimensionalen Abbildes 4 von zumindest einem Teil der Betonteilaußenfläche mit Sensormitteln zur Generierung einer Punktewolke. Anschließend findet ein Auslesen (II) von Flächen- und Tiefenstrukturinformationen SI aus dem dreidimensionalen Abbild 4 statt. Danach wird ein Vergleichen (III) der ausgelesenen Flächen- und Tiefenstrukturinformationen SI des dreidimensionalen Abbildes 4 mit für Sichtbetonklassen SB1 - SB4 charakteristische, in einer Musterdatenbank 9 hinterlegten Flächen- und Tiefenstrukturinformationen SI durchgeführt, um schließlich ein Zuordnen (IV) des Betonbauteils zu einer der Sichtbetonklassen SB1 - SB4 für die Ergebnisausgabe durch eine Anzeigeeinheit 10 auszuführen.

Zum Trainieren eines Machine-Learning-Modells für die Klassifikation hinsichtlich einer der Sichtbetonklassen SB1 - SB4 werden folgende Schritte durchgeführt:
Zunächst erfolgt ein Bereitstellen (V) von Trainings-Beispielen von Flächen- und Tiefenstrukturinformationen, die von dem optischen Meßgerät 3 erhalten wurden. Anschließend wird ein Auswerten (VI) von Trainings-Repräsentationen aus den Trainings-Beispielen durchgeführt, die Aufschluss über mindestens einen der strukturellen Parameter geben, der in den jeweiligen Trainingsbeispielen detektierbar oder sichtbar ist. Danach erfolgt ein Labeln (VII) der Trainings-Repräsentationen mit den Soll-Sichtbetonklassen, denen die in den Trainings-Beispielen sichtbaren Abbildern angehören. Als nächstes wird ein Abbilden (VIII) der Trainings-Beispiele auf Sichtbetonklassen durch das Machine-Learning-Modell durchgeführt. Schließlich erfolgt ein Bewerten (IX) der Abweichung dieser Sichtbetonklassen von den jeweiligen Soll-Sichtbetonklassen mit einer vorgegebenen Ziel- oder Kostenfunktion, wobei Parameter, die das Verhalten des Machine-Learning-Modells charakterisieren, mit dem Ziel optimiert werden, dass die weitere Verarbeitung von Trainings-Repräsentationen durch das Machine-Learning-Modell voraussichtlich zu einer besseren Bewertung durch die Ziel- oder Kostenfunktion führt.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch denkbar, dass die Musterdatenbank 9 nicht im mobilen Endgerät hinterlegt ist, sondern per Datenfernzugriff als zentrale Musterdatenbank 9` ausgebildet ist, welche für alle hierauf zugreifenden mobilen Endgeräte zentral aktualisiert und/oder trainiert wird. Eine Auswertung ist im Übrigen auch per Cloud-Computing denkbar. Hierfür wird nur das Bild beziehungsweise die Sensordaten in eine Cloud übermittelt. Die eigentliche Analyse und Verarbeitung findet dann hier statt.

### Bezugszeichenliste

- 1: Betonbauteil
- 2: Außenoberfläche
- 3: optisches Messgerät
- 4: dreidimensionales Abbild
- 5: LIDAR-Sensor
- 6: Fotokamera
- 7: Bildverarbeitungseinheit
- 8: Analyseeinheit
- 9: Musterdatenbank
- 10: Anzeigeeinheit
- 11: optische Sensorik
- 12: Mikroprozessor
- 13: Display
- 14: Speicher

- 100: Smartphone

- SB1-SB4: Sichtbetonklasse gemäß "Merkblatt Sichtbeton"
- SI: Flächen- und Tiefenstrukturinformationen
- T1-T3: Texturparameter
- P1-P4: Porigkeitsparameter
- FT1-FT3: Farbtongleichmäßigkeitsparameter
- E1-E3: Ebenheitsparameter
- AF1-AF4: Fugenparameter

## Patentansprüche

1. Computergestütztes Verfahren zur Prüfung einer Sichtbetonqualität eines Betonbauteils (1) hinsichtlich einer definierten Sichtbetonklasse (SB1 - SB4), dessen Außenoberfläche (2) zumindest teilweise mit einem optischen Messgerät (3) erfasst wird, umfassend die folgenden Schritte:
- Erstellen (I) eines dreidimensionalen Abbildes (4) von zumindest einem Teil der Außenoberfläche (2) durch ein optisches Messgerät (3) mit Sensormitteln zur Generierung einer Punktewolke;
- Auslesen (II) von Flächen- und Tiefenstrukturinformationen (SI) aus dem dreidimensionalen Abbild (4) durch eine Bildverarbeitungseinheit (7);
- Vergleichen (III) der ausgelesenen Flächen- und Tiefenstrukturinformationen (SI) des dreidimensionalen Abbildes (4) mit für Sichtbetonklassen (SB 1 - SB4) charakteristische, in einer Musterdatenbank (9) hinterlegten Flächen- und Tiefenstrukturinformationen (SI) durch eine Analyseeinheit (8) zum
- Zuordnen (IV) des Betonbauteils (1) zu einer der Sichtbetonklassen (SB1 - SB4) für die Ergebnisausgabe durch eine Anzeigeeinheit (10).

2. Verfahren nach Anspruch 1,
**dadurch gekennzeichnet, dass** die Generierung der Punktewolke mit einem LIDAR-Sensor (5) durchgeführt wird.

3. Verfahren nach Anspruch 1,
**dadurch gekennzeichnet, dass** beim dreidimensionalen Abbild (4) die aus der Punktewolke resultierenden Scaninformationen mit bildlichen Farbinformationen einer Fotokamera (6) des optischen Messgeräts (3) überlagert werden.

4. Verfahren nach Anspruch 1,
**dadurch gekennzeichnet, dass** die Flächen- und Tiefenstrukturinformationen als strukturelle Parameter ausgewählt werden aus einer Parametergruppe, umfassend: Texturparameter (T1 - T3), Porigkeitsparameter (P1 - P4), Farbtongleichmäßigkeitsparameter (FT1 - FT3), Ebenheitsparameter (E1 - E3), Fugenparameter (AF1 - AF4).

5. Verfahren nach Anspruch 4,
**dadurch gekennzeichnet, dass** das Vergleichen (III) hinsichtlich der Texturparameter (T1 - T3) durch Mustervergleich von auf der Außenoberfläche (2) detektierten Texturmustern mit entsprechender Maßzuordnung durchgeführt wird.

6. Verfahren nach Anspruch 4,
**dadurch gekennzeichnet, dass** das Vergleichen (III) hinsichtlich der Porigkeitsparameter (P1 - P3) durch Zählen und Größenerfassung von auf der Außenoberfläche (2) detektierten Poren durchgeführt wird.

7. Verfahren nach Anspruch 4,
**dadurch gekennzeichnet, dass** das Vergleichen (III) hinsichtlich der Farbtongleichmäßigkeitsparameter (FT1 - FT3) durch Erfassung von auf der Außenoberfläche (2) detektierten Verfärbungen durchgeführt wird.

8. Verfahren nach Anspruch 4,
**dadurch gekennzeichnet, dass** das Vergleichen (III) hinsichtlich der Ebenheitssparameter (E1 - E3) durch Verlaufsanalyse von entlang der Außenoberfläche (2) detektierten Tiefenschwankungen durchgeführt wird.

9. Verfahren nach Anspruch 4,
**dadurch gekennzeichnet, dass** das Vergleichen (III) hinsichtlich der Fugenparameter (AF1 - AF4) durch Mustervergleich von auf der Außenoberfläche (2) detektierten Arbeits- und Schalhautfugen mit entsprechender Maßzuordnung durchgeführt wird.

10. Verfahren nach Anspruch 1,
**dadurch gekennzeichnet, dass** das Zuordnen (IV) des Betonbauteils (1) zu einer der Sichtbetonklasse (SB1 - SB4) per Entscheidungsbaumverfahren auf Grundlage der strukturellen Parameter durchgeführt wird.

11. Verfahren nach Anspruch 1,
**dadurch gekennzeichnet, dass** aus den ausgelesenen Flächen- und Tiefenstrukturinformationen eine Repräsentation ausgewertet wird, die Aufschluss über mindestens einen der strukturellen Parameter gibt, wobei die Repräsentation mit einem trainierten Machine-Learning-Modell auf die Sichtbetonklasse (SB1 - SB4) abgebildet wird, dem das dreidimensionale Abbild (5) angehört.

12. Verfahren zum Trainieren eines trainierbaren Machine-Learning-Modells für den Einsatz in dem Verfahren nach Anspruch 11 mit den Schritten:
- Bereitstellen (V) von Trainings-Beispielen von Flächen- und Tiefenstrukturinformationen, die von dem optischen Meßgerät (3) erhalten wurden;
- Auswerten (VI) von Trainings-Repräsentationen aus den Trainings-Beispielen, die Aufschluss über mindestens einen der strukturellen Parameter geben, der in den jeweiligen Trainingsbeispielen detektierbar oder sichtbar ist;
- Labeln (VII) der Trainings-Repräsentationen mit den Soll-Sichtbetonklassen, denen die in den Trainings-Beispielen sichtbaren Abbildern angehören;
- Abbilden (VIII) der Trainings-Beispiele auf Sichtbetonklassen durch das Machine-Learning-Modell;
- Bewerten (IX) der Abweichung dieser Sichtbetonklassen von den jeweiligen Soll-Sichtbetonklassen mit einer vorgegebenen Ziel- oder Kostenfunktion;
wobei Parameter, die das Verhalten des Machine-Learning-Modells charakterisieren, mit dem Ziel optimiert werden, dass die weitere Verarbeitung von Trainings-Repräsentationen durch das Machine-Learning-Modell voraussichtlich zu einer besseren Bewertung durch die Ziel- oder Kostenfunktion führt.

13. Elektronische Einrichtung zur Prüfung einer Sichtbetonqualität eines Betonbauteils (1) hinsichtlich einer Sichtbetonklasse (SB1 - SB4) zur Durchführung des Verfahrens nach Anspruch 1, umfassend:
- ein optisches Messgerät (3), das dazu eingerichtet ist, zumindest einen repräsentativen Teil der Außenoberfläche (2) des Betonbauteils (1) zu erfassen, wobei
das optische Messgerät (3) ein dreidimensionales Abbild (4) von zumindest einem Teil der Außenoberfläche (2) durch Sensormittel zur Generierung einer Punktewolke erstellt;
- eine Bildverarbeitungseinheit (7), die dazu eingerichtet ist, Flächen- und Tiefenstrukturinformationen aus dem dreidimensionalen Abbild (4) auszulesen;
- eine Analyseeinheit (8), die dazu eingerichtet ist, für Sichtbetonklassen (SB1 - SB4) charakteristische, in einer Musterdatenbank (9) hinterlegten Flächen- und Tiefenstrukturinformationen zu vergleichen,
- eine Anzeigeeinheit (10), die dazu eingerichtet ist, das Betonbauteil (1) zu einer der Sichtbetonklassen (SB1 - SB4) zwecks Ergebnisausgabe zuzuordnen.

14. Einrichtung nach Anspruch 13,
**dadurch gekennzeichnet, dass** das optische Messgerät (3) neben einem LIDAR-Sensor (5) zur Generierung einer Punktewolke sowie eine Fotokamera (6) zur Erfassung von hiermit überlagerten Farbinformationen aufweist.

15. Mobiles digitales Endgerät, insbesondere Smartphone (100), mit einer Einrichtung nach einem der vorstehenden Ansprüche 13 und 14, dessen optische Sensorik (11) den LIDAR-Sensor (4) und die Fotokamera (6) umfasst, dessen Mikroprozessor (12) die Bildverarbeitungseinheit (7) und/oder die Analyseeinheit (8) verkörpert, und dessen Display (13) die Anzeigeeinheit (10) bildet.

16. Mobiles Endgerät nach Anspruch 15,
**dadurch gekennzeichnet, dass** dessen Speicher (14) die Musterdatenbank (9) beinhaltet, oder dass Mittel zum Datenfernzugriff auf eine zentrale Musterdatenbank (9') vorgesehen sind.

17. Computerprogramm mit Programmcodemitteln zur Ausführung eines Verfahrens nach zumindest einem der Ansprüche 1 bis 10, wenn das Computerprogramm auf einem Mikroprozessor (12) eines mobilen Endgeräts nach Anspruch 15 abläuft.

## Claims

1. Computer-implemented method for testing an exposed concrete quality of a concrete component (1) with respect to a defined exposed concrete class (SB1 - SB4), the outer surface (2) of which is at least partially detected by an optical measuring device (3), comprising the following steps:
- creating (I) a three-dimensional representation (4) of at least part of the outer surface (2) by an optical measuring device (3) with sensor means for generating a point cloud;
- reading (II) surface and depth structure information (SI) from the three-dimensional representation (4) by an image processing unit (7);
- comparing (III) the read surface and depth structure information (SI) of the three-dimensional representation (4) with surface and depth structure information (SI) characteristic of exposed concrete classes (SB1 - SB4) and stored in a pattern database (9) by means of an analysis unit (8) for
- assigning (IV) the concrete component (1) to one of the exposed concrete classes (SB1 - SB4) for the output of results by a display unit (10).

2. Method according to claim 1, **characterized in that** the generation of the point cloud is performed with a LIDAR sensor (5).

3. Method according to claim 1, **characterized in that**, in the case of the three-dimensional representation (4), the scanning information resulting from the point cloud is superimposed with pictorial color information from a photographic camera (6) of the optical measuring device (3).

4. Method according to claim 1, **characterized in that** the surface and depth structure information is selected as structural parameters from a parameter group comprising: texture parameters (T1 - T3), porosity parameters (P1 - P4), color uniformity parameters (FT1 - FT3), flatness parameters (E1 - E3), joint parameters (AF1 - AF4).

5. Method according to claim 4, **characterized in that** the comparing (III) with respect to the texture parameters (T1 - T3) is carried out by pattern matching of texture patterns detected on the outer surface (2) with corresponding dimension assignment.

6. Method according to claim 4, **characterized in that** the comparing (III) with respect to the porosity parameters (P1 - P3) is performed by counting and sizing pores detected on the outer surface (2).

7. Method according to claim 4, **characterized in that** the comparison (III) with respect to the color uniformity parameters (FT1 - FT3) is performed by detecting discolorations detected on the outer surface (2).

8. Method according to claim 4, **characterized in that** the comparison (III) with respect to the flatness parameters (E1 - E3) is performed by history analysis of depth variations detected along the outer surface (2).

9. Method according to claim 4, **characterized in that** the comparison (III) with respect to the joint parameters (AF1 - AF4) is carried out by pattern matching of working and formwork skin joints detected on the outer surface (2) with corresponding dimension assignment.

10. Method according to claim 1, **characterized in that** the assignment (IV) of the concrete component (1) to one of the exposed concrete classes (SB1 - SB4) is performed by decision tree method based on the structural parameters.

11. Method according to claim 1, **characterized in that** a representation is evaluated from the read-out surface and depth structure information, which provides information about at least one of the structural parameters, wherein the representation is mapped to the exposed concrete class (SB1 - SB4) with a trained machine learning model, to which the three-dimensional representation (5) belongs.

12. Method of training a trainable machine learning model for use in the method according to claim 11, comprising the steps of:
- Providing (V) training samples of surface and depth structure information obtained from the optical measurement device (3);
- evaluating (VI) training representations from the training examples that provide information about at least one of the structural parameters detectable or visible in the respective training examples;
- Labeling (VII) the training representations with the target visual concrete classes to which the images visible in the training examples belong;
- Mapping (VIII) the training examples to visible concrete classes by the machine learning model;
- evaluating (IX) the deviation of these exposed concrete classes from the respective target exposed concrete classes with a given objective or cost function;
wherein parameters characterizing the behavior of the machine-learning model are optimized with the aim that further processing of training representations by the machine-learning model is expected to lead to a better evaluation by the target or cost function.

13. Electronic device for testing an exposed concrete quality of a concrete component (1) with respect to an exposed concrete class (SB1 - SB4) for carrying out the method according to claim 1, comprising:
- an optical measuring device (3) configured to detect at least a representative part of the external surface (2) of the concrete component (1), wherein said optical measuring device (3) creating a three-dimensional representation (4) of at least a part of said outer surface (2) by sensor means for generating a point cloud;
- an image processing unit (7) configured to read surface and depth structure information from the three-dimensional representation (4); and
- an analysis unit (8) configured to compare surface and depth structure information characteristic for exposed concrete classes (SB1 - SB4) stored in a pattern database (9),
- a display unit (10) configured to assign the concrete component (1) to one of the architectural concrete classes (SB1 - SB4) for the purpose of outputting results.

14. Device according to claim 13, **characterized in that** the optical measuring device (3) comprises, in addition to a LIDAR sensor (5) for generating a point cloud, a photo camera (6) for capturing color information superimposed thereon.

15. Mobile digital terminal, in particular smartphone (100), with a device according to any one of the preceding claims 13 and 14, whose optical sensor system (11) comprises the LIDAR sensor (4) and the photo camera (6), whose microprocessor (12) embodies the image processing unit (7) and/or the analysis unit (8), and whose display (13) forms the display unit (10).

16. Mobile terminal according to claim 15, **characterized in that** its memory (14) contains the pattern database (9), or **in that** means are provided for remote data access to a central pattern database (9').

17. Computer program with program code means for executing a method according to at least any one of claims 1 to 10, if the computer program runs on a microprocessor (12) of a mobile terminal according to claim 15.

## Revendications

1. Procédé assisté par ordinateur pour contrôler une qualité de béton apparent d'un élément de construction en béton (1) en ce qui concerne une classe de béton apparent définie (SB1 - SB4), dont la surface extérieure (2) est détectée au moins partiellement par un appareil de mesure optique (3), comprenant les étapes suivantes consistant à :
- créer (I) une image tridimensionnelle (4) d'au moins une partie de la surface extérieure (2) par un appareil de mesure optique (3) comprenant des moyens capteurs destinés à générer un nuage de points ;
- lire (II) des informations de structure en surface et en profondeur (SI) à partir de l'image tridimensionnelle (4) par une unité de traitement d'images (7) ;
- comparer (III) les informations de structure en surface et en profondeur (SI) lues de l'image tridimensionnelle (4) avec des informations de structure en surface et en profondeur (SI) qui sont caractéristiques des classes de béton apparent (SB1 - SB4) et mémorisées dans une base de données de modèle (9), par une unité d'analyse (8), afin de
- attribuer (IV) l'élément de construction en béton (1) à l'une des classes de béton apparent (SB1 - SB4) pour la sortie des résultats par une unité d'affichage (10).

2. Procédé selon la revendication 1,
**caractérisé en ce que** la génération du nuage de points est effectuée par un capteur LIDAR (5).

3. Procédé selon la revendication 1,
**caractérisé en ce que**, dans l'image tridimensionnelle (4), les informations de balayage résultant du nuage de points sont recouvertes par des informations chromatiques d'image d'une caméra photographique (6) de l'appareil de mesure optique (3).

4. Procédé selon la revendication 1,
**caractérisé en ce que** les informations de structure en surface et en profondeur sont sélectionnées comme paramètres structurels parmi un groupe de paramètres comprenant : des paramètres de texture (T1- T3), des paramètres de porosité (P1 - P4), des paramètres d'uniformité de couleur (FT1 - FT3), des paramètres de planéité (E1 - E3), des paramètres de joints (AF1 - AF4).

5. Procédé selon la revendication 4,
**caractérisé en ce que** la comparaison (III) concernant les paramètres de texture (T1 - T3) est effectuée par comparaison de modèle des motifs de texture détectés sur la surface extérieure (2) avec une attribution dimensionnelle correspondante.

6. Procédé selon la revendication 4,
**caractérisé en ce que** la comparaison (III) concernant les paramètres de porosité (P1 - P3) est effectuée par comptage et détection de la taille des pores détectés sur la surface extérieure (2).

7. Procédé selon la revendication 4,
**caractérisé en ce que** la comparaison (III) concernant les paramètres d'uniformité de couleur (FT1 - FT3) est effectuée par détection de décolorations détectées sur la surface extérieure (2).

8. Procédé selon la revendication 4,
**caractérisé en ce que** la comparaison (III) concernant les paramètres de planéité (E1 - E3) est effectuée par analyse de l'évolution des variations en profondeur détectées le long de la surface extérieure (2).

9. Procédé selon la revendication 4,
**caractérisé en ce que** la comparaison (III) concernant les paramètres de joints (AF1 - AF4) est effectuée par comparaison de modèle des joints de construction et des joints de peau de coffrage détectés sur la surface extérieure (2) avec une attribution dimensionnelle correspondante.

10. Procédé selon la revendication 1,
**caractérisé en ce que** l'attribution (IV) de l'élément de construction en béton (1) à l'une des classes de béton apparent (SB1 - SB4) est effectuée par un procédé d'arbre de décision sur la base des paramètres structurels.

11. Procédé selon la revendication 1,
**caractérisé en ce qu'**à partir des informations de structure en surface et en profondeur lues, on évalue une représentation qui donne des informations sur au moins l'un des paramètres structurels, la représentation étant reproduite sur la classe de béton apparent (SB1 - SB4) avec un modèle entraîné d'apprentissage automatique dont fait partie l'image tridimensionnelle (5).

12. Procédé d'entraînement d'un modèle d'apprentissage automatique pouvant être entraîné, destiné à être mis en oeuvre dans le procédé selon la revendication 11, comprenant les étapes consistant à :
- fournir (V) des exemples d'entraînement d'informations de structure en surface et en profondeur obtenues par l'appareil de mesure optique (3) ;
- évaluer (VI) des représentations d'entraînement à partir des exemples d'entraînement, qui donnent des informations sur au moins l'un des paramètres structurels qui est détectable ou visible dans les exemples d'entraînement respectifs ;
- étiqueter (VII) les représentations d'entraînement avec les classes de béton apparent de consigne dont font partie les images visibles dans les exemples d'entraînement ;
- reproduire (VIII) les exemples d'entraînement sur des classes de béton apparent par le modèle d'apprentissage automatique ;
- évaluer (IX) l'écart desdites classes de béton apparent par rapport aux classes respectives de béton apparent de consigne, avec une fonction cible ou de coûts prédéterminée ;
dans lequel les paramètres qui caractérisent le comportement du modèle d'apprentissage automatique sont optimisés dans le but que le traitement ultérieur des représentations d'entraînement par le modèle d'apprentissage automatique mène probablement à une meilleure évaluation par la fonction cible ou de coûts.

13. Dispositif électronique pour contrôler une qualité de béton apparent d'un élément de construction en béton (1) en ce qui concerne une classe de béton apparent (SB1 - SB4), afin de mettre en oeuvre le procédé selon la revendication 1, comprenant :
- un appareil de mesure optique (3) conçu pour détecter au moins une partie représentative de la surface extérieure (2) de l'élément de construction en béton (1),
dans lequel
l'appareil de mesure optique (3) crée une image tridimensionnelle (4) d'au moins une partie de la surface extérieure (2) par des moyens capteurs destinés à générer un nuage de points ;
- une unité de traitement d'images (7) conçue pour lire des informations de structure en surface et en profondeur à partir de l'image tridimensionnelle (4) ;
- une unité d'analyse (8) conçue pour comparer des informations de structure en surface et en profondeur qui sont caractéristiques des classes de béton apparent (SB1 - SB4) et mémorisées dans une base de données de modèle (9),
- une unité d'affichage (10) conçue pour affecter l'élément de construction en béton (1) à l'une des classes de béton apparent (SB1 - SB4) pour la sortie de résultats.

14. Dispositif selon la revendication 13,
**caractérisé en ce que** l'appareil de mesure optique (3) comprend, outre un capteur LIDAR (5) pour la génération d'un nuage de points, une caméra photographique (6) pour la détection d'informations chromatiques recouvertes par celui-ci.

15. Terminal numérique mobile, en particulier smartphone (100), comprenant un dispositif selon l'une des revendications précédentes 13 et 14, dont le système capteur optique (11) comprend le capteur LIDAR (4) et la caméra photographique (6), dont le microprocesseur (12) constitue l'unité de traitement d'images (7) et/ou l'unité d'analyse (8), et dont l'écran d'affichage (13) forme l'unité d'affichage (10).

16. Terminal mobile selon la revendication 15,
**caractérisé en ce que** sa mémoire (14) contient la base de données de modèle (9), ou **en ce que** des moyens d'accès à distance aux données sont prévus pour une base de données de modèle centrale (9').

17. Programme d'ordinateur comportant des moyens de codage de programme pour la mise en oeuvre d'un procédé selon l'une au moins des revendications 1 à 10, lorsque le programme d'ordinateur s'exécute sur un microprocesseur (12) d'un terminal mobile selon la revendication 15.
